(19) Europäisches Patentamt
European Patent Office
Office européen des brevets

(11) **EP 4 535 065 A1**

(12) **EUROPEAN PATENT APPLICATION**
published in accordance with Art. 153(4) EPC

(43) Date of publication:
09.04.2025 Bulletin 2025/15

(21) Application number: 23811791.5

(22) Date of filing: 22.05.2023

(51) International Patent Classification (IPC):
*G02B 30/56* (2020.01)  *G02B 17/06* (2006.01)
*G02F 1/13357* (2006.01)  *G06F 3/01* (2006.01)
*G09F 9/00* (2006.01)  *G09F 19/18* (2006.01)

(52) Cooperative Patent Classification (CPC):
G02B 17/06; G02B 30/56; G02F 1/1336;
G06F 3/01; G09F 9/00; G09F 19/18

(86) International application number:
PCT/JP2023/019033

(87) International publication number:
WO 2023/228919 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.05.2022  JP 2022087244
03.08.2022  JP 2022124387

(71) Applicant: Kyocera Corporation
Kyoto-shi, Kyoto 612-8501 (JP)

(72) Inventor: SHIMOSE, Kazuki
Kyoto-shi, Kyoto 612-8501 (JP)

(74) Representative: TBK
Bavariaring 4-6
80336 München (DE)

(54) **DISPLAY DEVICE AND AERIAL IMAGE DISPLAY DEVICE**

(57) A display device includes a display, and displays, using light including infrared light, a high-temperature image portion representing a high-temperature object having a temperature higher than a predetermined temperature in response to an image displayed by the display including the high-temperature image portion. An aerial image display device includes a display including a display surface, and a reflective optical system that reflects image light of an image displayed on the display surface and forms an aerial image as a real image. The aerial image display device displays, using light including infrared light, a high-temperature image portion representing a high-temperature object having a temperature higher than a predetermined temperature on the display surface in response to the image including the high-temperature image portion. The aerial image display device displays the high-temperature image portion as a video.

FIG. 1A

# EP 4 535 065 A1

**Description**

TECHNICAL FIELD

The present disclosure relates to a display device and an aerial image display device.

BACKGROUND OF INVENTION

A known aerial image display device is described in, for example, Patent Literature 1.

CITATION LIST

PATENT LITERATURE

Patent Literature 1: Japanese Unexamined Patent Application Publication No. 2020-67707

SUMMARY

In an aspect of the present disclosure, a display device includes a display. The display device displays, using light including infrared light, a high-temperature image portion representing a high-temperature object having a temperature higher than a predetermined temperature in response to an image displayed by the display including the high-temperature image portion.

In an aspect of the present disclosure, an aerial image display device includes a display including a display surface, and a reflective optical system that reflects image light of an image displayed on the display surface and forms an aerial image as a real image. The aerial image display device displays, using light including infrared light, a high-temperature image portion representing a high-temperature object having a temperature higher than a predetermined temperature on the display surface in response to the image including the high-temperature image portion.

BRIEF DESCRIPTION OF THE DRAWINGS

The objects, features, and advantages of the present disclosure will become more apparent from the following detailed description and the drawings.

FIG. 1A is a side view of an aerial image display device according to an embodiment of the present disclosure, illustrating its main components with a block diagram.

FIG. 1B is a side view of an aerial image display device according to another embodiment of the present disclosure, illustrating its main components with a block diagram.

FIG. 2A is a cross-sectional view of an example display in the aerial image display device in FIG. 1A.

FIG. 2B is a plan view of multiple visible light emitters and multiple infrared light emitters in the display in FIG. 2A in an example arrangement.

FIG. 3 is a front view of an example image displayed on the display.

FIG. 4A is a cross-sectional view of another example display in the aerial image display device in FIG. 1A.

FIG. 4B is a plan view of multiple visible light emitters and multiple infrared light emitters in the display in FIG. 4A in an example arrangement.

FIG. 4C is a plan view of the multiple visible light emitters and the multiple infrared light emitters in the display in FIG. 4A in another example arrangement.

FIG. 5 is a cross-sectional view of a first concave mirror in a reflective optical system in the aerial image display device in FIG. 1A, describing the definition of the curvature of the first concave mirror.

FIG. 6 is a plan view of the multiple visible light emitters and the multiple infrared light emitters in the display in FIG. 2A in another example arrangement.

FIG. 7 is a plan view of the multiple visible light emitters and the multiple infrared light emitters in the display in FIG. 4A in another example arrangement.

FIG. 8 is a side view of an aerial image display device according to another embodiment of the present disclosure, illustrating its main components with a block diagram.

FIG. 9 is a side view of an aerial image display device according to another embodiment of the present disclosure, illustrating its main components with a block diagram.

FIG. 10 is a side view of a hand of a user and its surroundings, describing the operation and the effects of the aerial image display device in FIG. 9.

FIG. 11 is a side view of an aerial image display device according to another embodiment of the present disclosure, illustrating its main components with a block diagram.

DESCRIPTION OF EMBODIMENTS

Various aerial image display devices have been proposed to form an aerial image from image light emitted from a display device. Patent Literature 1 describes an aerial image display device including a display device that emits infrared light.

New visual experiences are to be provided to users. The known display device and the known aerial image display device described in Patent Literature 1 have not provided users with new visual experiences using infrared light.

One or more embodiments of the present disclosure will now be described with reference to the drawings. The drawings used hereafter illustrate the main components of an aerial image display device according to one or more embodiments of the present disclosure. In the embodiments, the aerial image display device may include known components that are not illustrated, for example, drive circuits, circuit boards, wiring conductors, or cases. The drawings used hereafter are schematic and are not necessarily drawn to scale relative to the actual size of each component. Some of the drawings use an orthogonal XYZ coordinate system defined for convenience.

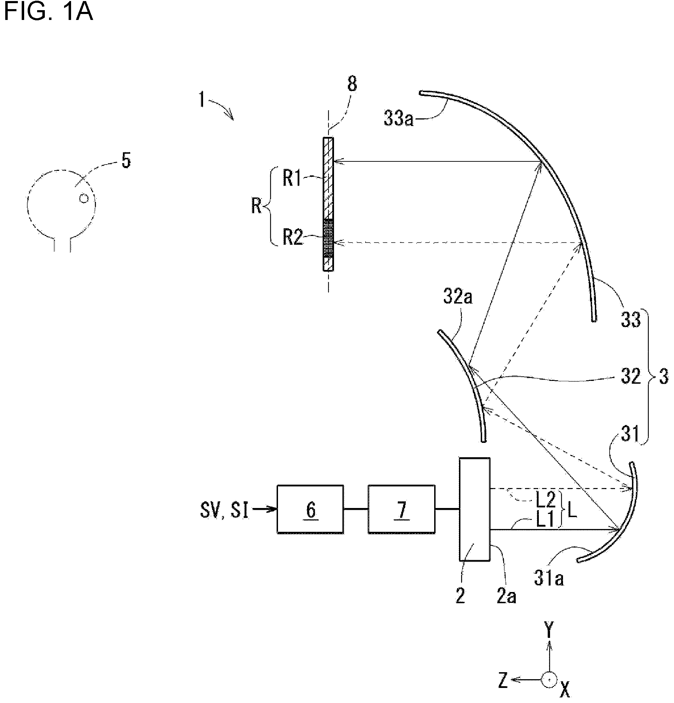

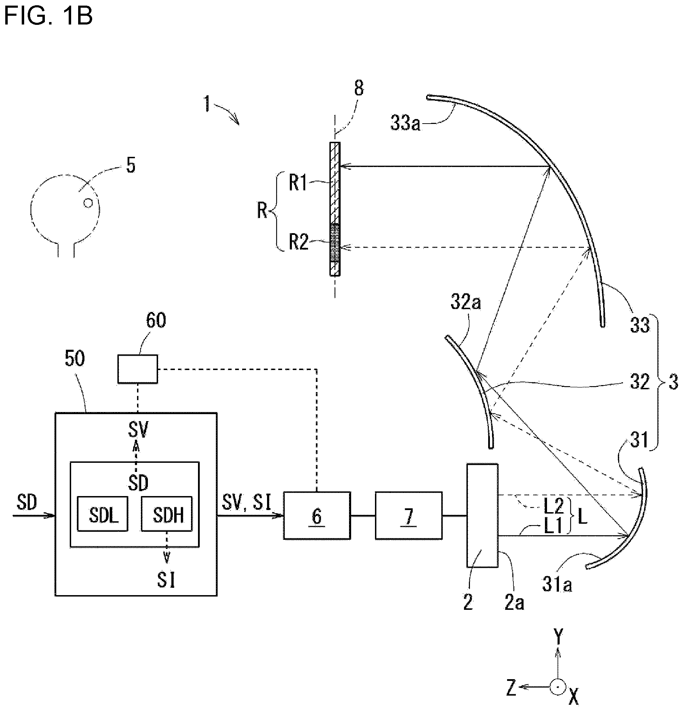

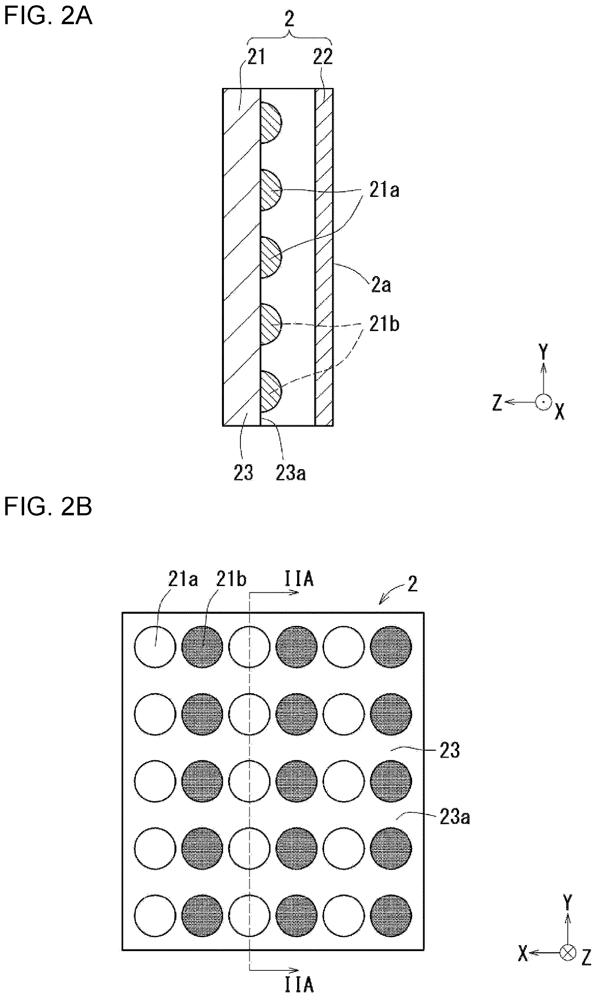

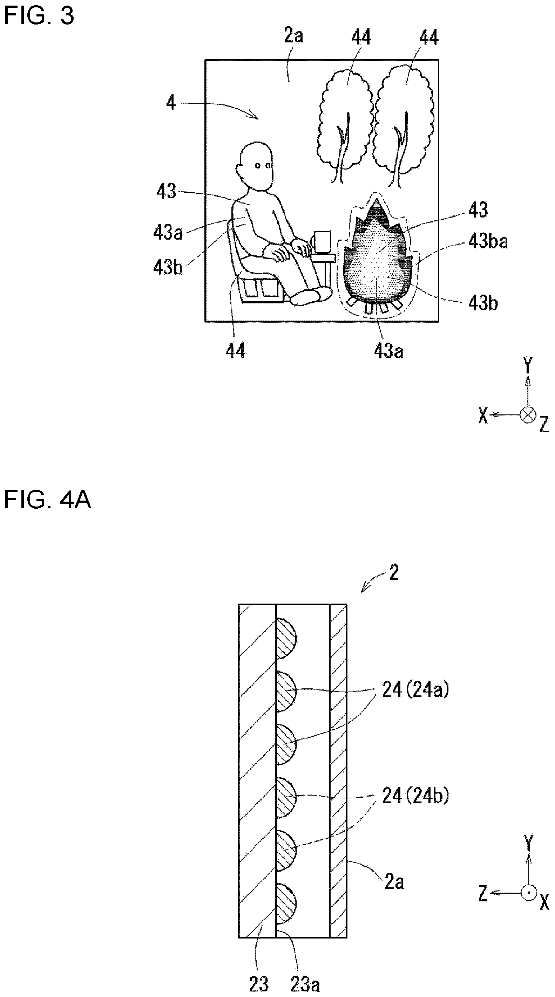

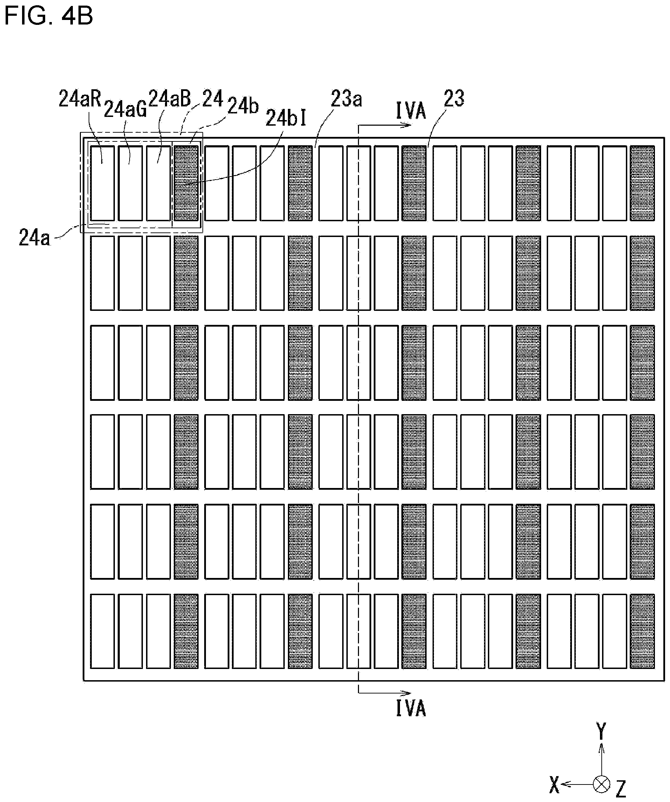

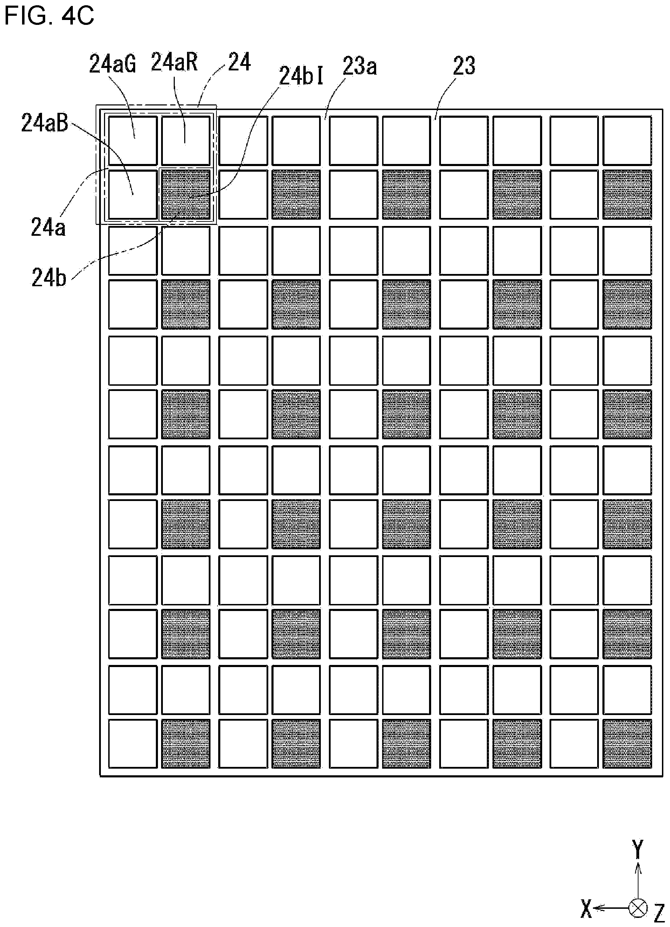

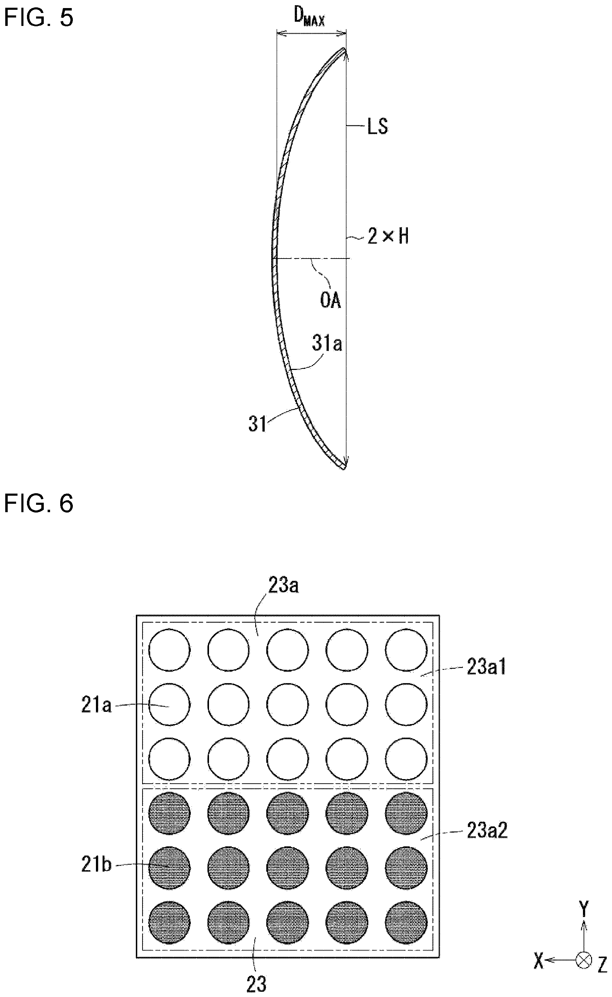

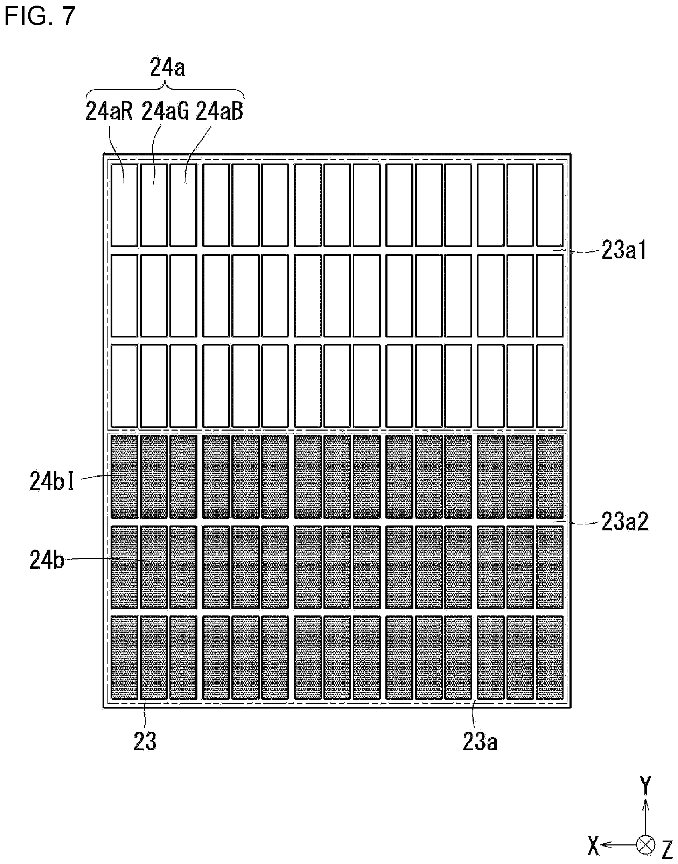

FIGs. 1A and 1B are diagrams of aerial image display devices according to two embodiments of the present disclosure. FIG. 2A is a cross-sectional view of an example display in the aerial image display device in FIG. 1A. FIG. 2B is a plan view of multiple visible light emitters and multiple infrared light emitters in the display in FIG. 2A in an example arrangement. FIG. 3 is a front view of an image displayed on the display. FIG. 4A is a cross-sectional view of another example display in the aerial image display device in FIG. 1A. FIG. 4B is a plan view of multiple visible light emitters and multiple infrared light emitters in the display in FIG. 4A in an example arrangement. FIG. 4C is a plan view of the multiple visible light emitters and the multiple infrared light emitters in the display in FIG. 4A in another example arrangement. FIG. 5 is a cross-sectional view of a first concave mirror in a reflective optical system in the aerial image display device in FIG. 1A, describing the definition of the curvature of the first concave mirror. FIG. 6 is a plan view of the multiple visible light emitters and the multiple infrared light emitters in the display in FIG. 2A in another example arrangement. FIG. 7 is a plan view of the multiple visible light emitters and the multiple infrared light emitters in the display in FIG. 4A in another example arrangement. An aerial image is hatched in FIGs. 1A and 1B. FIG. 2A illustrates a cross section taken along section line IIA-IIA in FIG. 2B. FIG. 4A illustrates a cross section taken along section line IVA-IVA in FIG. 4B. Infrared light emitters (infrared light emitting elements) are hatched in FIGs. 2B, 4B, 4C, 6, and 7. Each of FIGs. 2B, 4B, 4C, 6, and 7 illustrates the visible light emitters and the infrared light emitters arranged on a substrate alone.

In one or more embodiments of the present disclosure, a display device includes a display. The display device is configured to display, using light including infrared light, a high-temperature image portion representing a high-temperature object having a temperature higher than a predetermined temperature in response to an image displayed by the display including the high-temperature image portion. For example, as illustrated in FIG. 3, the display device includes a display surface 2a. The display device displays, using light including infrared light, a high-temperature image portion 43 representing a high-temperature object having a temperature higher than a predetermined temperature in response to an image 4 displayed on the display surface 2a including the high-temperature image portion 43. The above structure produces the effects described below. When the image 4 includes the high-temperature image portion 43, the high-temperature image portion 43 in the image 4 is displayed with light (visible light) including infrared light. Thus, a user (also referred to as a viewer) can perceive the high-temperature image portion 43 displayed with visible light visually and with a thermal sensation (e.g., a cutaneous sensation; hereafter also referred to as warmth). This can provide the user with a new visual experience with warmth.

The display device may include a display 2, a housing accommodating the display 2, and a support or a mount supporting the housing. The display 2 may be a transmissive display 2, which may be a liquid crystal display including a backlight and a liquid crystal panel. The backlight may be a direct backlight including multiple light emitters arranged two-dimensionally on a rear surface of the liquid crystal panel. For example, the multiple light emitters include multiple visible light emitters and multiple infrared light emitters. The backlight includes a substrate. The multiple visible light emitters and the multiple infrared light emitters may be arranged alternately in a matrix on a surface (also referred to as a light-emitting surface) of the substrate. The visible light emitters and the infrared light emitters may include self-luminous elements such as light-emitting diodes (LEDs) or organic light-emitting diodes (OLEDs).

The display 2 in the display device is not limited to the transmissive display 2 and may be a self-luminous display 2 including multiple self-luminous elements. The self-luminous elements may be, for example, LEDs or OLEDs. The self-luminous display 2 includes multiple pixels. Each of the multiple pixels includes a visible light emitter and an infrared light emitter. The self-luminous display 2 includes a substrate. The multiple visible light emitters and the multiple infrared light emitters may be arranged alternately in a matrix on a light-emitting surface of the substrate.

When the image 4 displayed by the display 2 includes the high-temperature image portion 43 representing a high-temperature object having a temperature higher than a predetermined temperature (e.g., normal temperature), the liquid crystal display causes the infrared light emitters on the backlight corresponding to the high-temperature image portion 43 to emit light. The self-luminous display 2 causes the infrared light emitters corresponding to the high-temperature image portion 43 to emit light. The light intensity of the infrared light emitters may be controlled based on an estimated temperature of the high-temperature image portion 43. The light intensity of the infrared light emitters may be controlled by, for example, a light emission controller connected to or included in the display 2 that controls a current input into or a voltage applied to the infrared light emitters. When the high-temperature image portion 43 is, for example, a person, an animal, or a character, the light intensity of the infrared light emitters may be controlled to allow the user to perceive the warmth corresponding to the body temperature (about 35 to 37 °C) of the person, the animal, or the character. When the high-temperature image portion 43 is a heat generating object such as hot water (about 38 to 42 °C), the light intensity of the infrared light emitters may be controlled to allow the user to perceive the warmth corresponding to the hot water. When the high-temperature image portion 43 is a heat generating object such as a flame, the light intensity of the infrared light emitters may be controlled to allow the user to perceive the warmth (about 40 to 50 °C) to be obtained when the user places a hand over the flame. When the high-temperature image portion 43 is a heat generating object such as the sun, the light intensity of the infrared light emitter may be controlled to allow the user to perceive the warmth (about 30 to 50 °C) corresponding to the heat from the sun.

The display device may distinguish the high-temperature image portion 43 and a portion other than the high-temperature image portion in the image 4 displayed on the display 2 as described below. The display device may include a light emission controller configured to store image data for each frame. The image data (also referred to as high-temperature image data) of the high-temperature image portion 43 may thus be stored in a distinguishable manner. For example, a start flag, a start tag, or another piece of data that indicates the beginning of the high-temperature image data may be added to a head (beginning) of the high-temperature image data, and an end flag, an end tag, or another piece of data that indicates the end of the high-temperature image data may be added to a tail (end) of the high-temperature image data. The processing of adding a start flag, a start tag, or another piece of data to the high-temperature image data or processing of adding an end flag, an end tag, or another piece of data may be performed manually. The processing of adding a start flag, a start tag, or another piece of data to the high-temperature image data or the processing of adding an end flag, an end tag, or another piece of data may be performed using an imaging device such as a camera to capture an image of the image 4 displayed on the display 2. An image captured with the camera (captured image) is analyzed with an analysis software program to identify the high-temperature image portion 43 in the captured image. The analysis software program may include an artificial intelligence (AI) software program for performing image recognition in which the captured image is analyzed to detect and extract a specific pattern. The AI software program may perform image recognition in which the image data is directly analyzed to detect and extract a specific pattern.

The display device can be used in various electronic devices. Such electronic devices include automobile route guidance systems (car navigation systems), ship route guidance systems, aircraft route guidance systems, indicators for instruments in vehicles such as automobiles, instrument panels, smartphones, mobile phones, tablets, personal digital assistants (PDAs), video cameras, digital still cameras, electronic organizers, electronic books, electronic dictionaries, personal computers, copiers, terminals for game devices, television sets, product display tags, price display tags, programmable display devices for industrial use, car audio systems, digital audio players, facsimile machines, printers, automatic teller machines (ATMs), vending machines, medical display devices, digital display watches, smartwatches, guidance display devices installed in stations or airports, signage (digital signage) for advertisement, and head-mounted displays (HMDs).

In the present embodiment, as illustrated in FIG. 1A, an aerial image display device 1 includes a display (hereafter also referred to as a display device) 2 and a reflective optical system 3.

The display device 2 includes a display surface 2a and displays the image 4 that propagates as image light L toward the reflective optical system 3 (a first concave mirror 31) on the display surface 2a. The display device 2 can display the image 4 (illustrated in FIG. 3 as an example) including a visible light image including infrared light. The display device 2 emits the image light L through the display surface 2a. The image light L may include at least one of visible light L1 or infrared light L2. The image light L may thus include the visible light L1 alone in some cases and may include the infrared light L2 alone in other cases.

The reflective optical system 3 reflects the image light L of the image 4 displayed on the display surface 2a and forms an aerial image R as a real image. A user 5 can thus perceive the aerial image R formed with the image light L. When the image light L includes the visible light L1 alone, the user 5 can visually perceive a visible light aerial image R1 formed with the visible light L1. When the image light L includes the visible light L1 and the infrared light L2, the user 5 can visually perceive the visible light aerial image R1 formed with the visible light L1 and can perceive the temperature of an infrared aerial image R2 formed with the infrared light L2 with a sensation (e.g., a cutaneous sensation). The reflective optical system 3 includes a reflective optical element such as a concave mirror or a convex mirror.

The display device 2 may be a transmissive display device 2 illustrated in FIG. 2A. The transmissive display device 2 may be a liquid crystal display including a backlight 21 and a liquid crystal panel 22.

The backlight 21 may be a direct backlight including multiple light emitters arranged two-dimensionally on a rear surface (specifically, a light incident surface) of the liquid crystal panel 22. The multiple light emitters include multiple visible light emitters 21a and multiple infrared light emitters 21b. As illustrated in FIGs. 2A and 2B, the backlight 21 includes a substrate 23. The multiple visible light emitters 21a and the multiple infrared light emitters 21b may be arranged alternately in a matrix on a first surface 23a of the substrate 23. The visible light emitters 21a and the infrared light emitters 21b may include self-luminous elements such as LEDs or OLEDs. The substrate 23 may be, for example, a glass substrate, a plastic substrate, a metal substrate, or a ceramic substrate or may be a composite substrate as a stack of some of these substrates.

The visible light emitters 21a may emit white light. In this case, the visible light emitters 21a may include a red LED that emits red light, a green LED that emits green light, and a blue LED that emits blue light. Each of the visible light emitters 21a may include a white LED that emits white light. The white LED may include an ultraviolet LED that emits ultraviolet light and a phosphor that converts the ultraviolet light emitted from the ultraviolet LED to white light through wavelength conversion. The white LED may include a blue LED that emits blue light and a phosphor that converts the blue light emitted from the blue LED to white light through wavelength conversion.

Each of the infrared light emitters 21b may be an infrared LED. The infrared LED may be a near infrared LED that emits near infrared light or infrared light having a wavelength of about 0.78 to 2.5 $\mu$m. A range of values referred to herein as one value to another value intends to mean the two values being inclusive.

As well known, the liquid crystal panel 22 may include a first polarizing plate, a color filter substrate, a liquid crystal layer, an array substrate, and a second polarizing plate. The liquid crystal panel 22 includes multiple pixels. Each of the pixels may include a subpixel for emitting red light, a subpixel for emitting green light, and a subpixel for emitting blue light. The pixel may include a subpixel for emitting infrared light. Infrared light has a higher transmittance through the liquid crystal panel 22 than visible light. Thus, the pixel may include no subpixel for emitting infrared light. The subpixel for emitting red light converts white light emitted from the visible light emitter 21a to red light (red-colored light) using a red filter in the color filter substrate and controls the amount of red light transmission. The amount of red light transmission may be controlled by controlling the light amount from the white LED corresponding to the subpixel for emitting red light. The subpixel for emitting red light may use red light emitted from the red LED in the visible light emitter 21a corresponding to the subpixel. In this case, the amount of red light transmission may be controlled by controlling the light amount from the red LED. The structure of the subpixel described above may be applicable to the subpixel for emitting green light and the subpixel for emitting blue light. The subpixel for emitting red light, the subpixel for emitting green light, and the subpixel for emitting blue light may partly block the infrared light emitted from the infrared light emitters 21b.

For the pixel including the subpixel for emitting infrared light, the subpixel for emitting infrared light may use infrared light emitted from the infrared LED as the infrared light emitter 21b corresponding to the subpixel. In the subpixel for emitting infrared light, the amount of infrared light transmission may be controlled by controlling the light amount from the infrared LED.

For the pixel including no subpixel for emitting infrared light, the infrared light emitted from the infrared LED as the infrared light emitter 21b may transmit through at least one of the subpixel for emitting red light, the subpixel for emitting green light, or the subpixel for emitting blue light. The amount of infrared light transmission in the pixel may be controlled by controlling the light amount from, for example, the infrared LED.

The display device 2 having the above structure can display the visible light image including infrared light on the display surface 2a based on an image signal input from outside. The display device 2 may have the function of local dimming. More specifically, the display device 2 may control, based on the image signal input from outside, the intensity of white light emitted from each of the multiple visible light emitters 21a individually and the intensity of infrared light emitted from each of the multiple infrared light emitters 21b individually. This can improve the contrast and the tone of the image 4, and thus can improve the contrast and the tone of the aerial image R. The display device 2 may also consume less power.

FIG. 2B illustrates an example including the same number of visible light emitters 21a and infrared light emitters 21b, but the infrared light emitters 21b may be fewer than the visible light emitters 21a. Infrared light emitted from the infrared light emitters 21b is more likely to transmit through the liquid crystal panel 22 than visible light (white light) emitted from the visible light emitters 21a. Thus, the infrared light emitters 21b fewer than the visible light emitters 21a can maintain the infrared light L2 with sufficient intense.

The display device 2 is not limited to the transmissive display device 2 and may be a self-luminous display device 2 including multiple self-luminous elements. The self-luminous display device 2 includes multiple pixels 24 (illustrated in FIG. 4A). Each of the multiple pixels 24 includes a visible light emitter 24a and an infrared light emitter 24b. As illustrated in FIGs. 4A and 4B, the self-luminous display device 2 includes a substrate 23. The multiple visible light emitters 24a and the multiple infrared light emitters 24b may be arranged alternately in a matrix on a first surface 23a of the substrate 23.

As illustrated in FIG. 4B, each of the multiple visible light emitters 24a includes a red-light emitting element 24aR that emits red light, a green-light emitting element 24aG that emits green light, and a blue-light emitting element 24aB that emits blue light. Each of the multiple infrared light emitters 24b includes an infrared light emitting element 24bI that emits infrared light. Each of the red-light emitting element 24aR, the green-light emitting element 24aG, the blue-light emitting element 24aB, and the infrared light emitting element 24bI may be, for example, an LED or an OLED. Each of the red-light emitting element 24aR, the green-light emitting element 24aG, the blue-light emitting element 24aB, and the infrared light emitting element 24bI may be a micro-LED. The micro-LED located on the first surface 23a may be rectangular as viewed in plan with each side having a length of about 1 to 100 $\mu$m inclusive, or about 3 to 10 $\mu$m inclusive. The infrared light emitting element 24bI may be a near infrared LED, an infrared LED, a near infrared OLED, or an infrared OLED that emits near infrared light or infrared light having a wavelength of about 0.78 to 2.5 $\mu$m.

The self-luminous display device 2 controls the luminous intensity of the multiple visible light emitters 24a (specifically, the red-light emitting elements 24aR, the green-light emitting elements 24aG, and the blue-light emitting elements 24aB) individually and controls the light intensity of the multiple infrared light emitters 24b individually based on the image signal input from outside. The self-luminous display device 2 can thus display the image 4 including the visible light image and an infrared image on the display surface 2a. Note that, although the infrared image cannot be directly perceived visually by humans, an infrared image portion and its surroundings in the aerial image R can be perceived by humans through a tactile sensation. Thus, the infrared image may be referred to as an infrared warm portion.

The red-light emitting element 24aR, the green-light emitting element 24aG, the blue-light emitting element 24aB, and the infrared light emitting element 24bI in each of the pixels in the self-luminous display device 2 may be arranged in a row direction (a lateral direction in FIG. 4B) of the display device 2 as illustrated in FIG. 4B. The red-light emitting element 24aR, the green-light emitting element 24aG, the blue-light emitting element 24aB, and the infrared light emitting element 24bI in each of the pixels may be arranged in a matrix of two rows and two columns as illustrated in FIG. 4C.

The aerial image display device 1 includes a light emission controller 6 as illustrated in FIG. 1A. The light emission controller 6 controls the image 4 displayed on the display surface 2a based on the image signal input from outside. The image signal includes a visible light image signal SV and an infrared image signal SI. The light emission controller 6 causes the display surface 2a to display the visible light image based on the visible light image signal SV and mixes infrared light on the display surface 2a based on the infrared image signal SI. More specifically, the light emission controller 6 controls the display device 2 to mix infrared light to the visible light image.

The light emission controller 6 may include one or more processors. The processors may include a general-purpose processor that reads a specific program to perform a specific function and a processor dedicated to specific processing. The dedicated processor may include an application specific integrated circuit (ASIC). The processors may include a programmable logic device (PLD). The PLD may include a field-programmable gate array (FPGA). The light emission controller 6 may be a system on a chip (SoC) or a system in a package (SiP) in which one or more processors cooperate with one another.

The light emission controller 6 may also have the functions of, for example, turning on and off the display device 2, transmitting the image signal to the display device 2, and adjusting the luminance, the chromaticity, the frame frequency, or other parameters of the images. For the display device 2 including a heat dissipator or a cooling member, the light emission controller 6 may have the function of adjusting the temperature of the heat dissipator or the cooling member.

When the image 4 displayed on the display surface 2a of the display device 2 includes the high-temperature image portion 43 representing a high-temperature object having a temperature higher than the predetermined temperature, the predetermined temperature may be defined by a normal temperature described in detail below. The embodiment below is described mainly with the display device 2 displaying the image 4 including a normal temperature image portion 44 and the high-temperature image portion 43 (illustrated in FIG. 3 as an example). Note that the normal temperature image portion 44 is a portion different from the high-temperature image portion 43 in the image 4.

The aerial image display device 1 may distinguish between the normal temperature image portion 44 and the high-temperature image portion 43 in the image displayed on the display device 2 as described below. The light emission controller 6 may be configured to store image data for each frame. The light emission controller 6 may store the image data in a manner to distinguish image data of the high-temperature image portion 43 (also referred to as high-temperature image data). For example, a start flag, a start tag, or another piece of data that indicates the beginning of the high-temperature image data may be added to a head (beginning) of the high-temperature image data, and an end flag, an end tag, or another piece of data that indicates the end of the high-temperature image data may be added to a tail (end) of the high-temperature image data. The processing of adding a start flag, a start tag, or another piece of data to the high-temperature image data or processing of adding an end flag, an end tag, or another piece of data may be performed manually. The processing of adding a start flag, a start tag, or another piece of data to the high-temperature image data or the processing of adding an end flag, an end tag, or another piece of data may be performed using an imaging device such as a camera to capture an image of the image 4 displayed on the display device 2. An image captured with the camera (captured image) is analyzed with an analysis software program to identify the high-temperature image portion 43 in the captured image. The analysis software program may include an AI software program for performing image recognition in which the captured image is analyzed to at least detect or extract a specific pattern. The AI software program may perform image recognition in which the image data is directly analyzed to at least detect or extract a specific pattern.

The light emission controller 6 may be configured to distinguishably store image data (also referred to as normal temperature image data) of the normal temperature image portion 44 in the same or a similar manner. For example, a start flag, a start tag, or another piece of data that indicates the beginning of the normal temperature image data may be added to a head (beginning) of the normal temperature image data, and an end flag, an end tag, or another piece of data that indicates the end of the normal temperature image data may be added to a tail (end) of the normal temperature image data. The processing of adding a start flag, a start tag, or another piece of data to the normal temperature image data or processing of adding an end flag, an end tag, or another piece of data may be performed as described above. Note that the normal temperature may be, for example, 15 to 25 °C, or may be 20 °C. The aerial image display device 1 may also include a temperature sensor 60 (illustrated in FIG. 1B) that detects an ambient temperature of its surroundings. In this case, the normal temperature may be the ambient temperature detected by the temperature sensor 60. The user 5 may set the normal temperature to any temperature or any temperature range to reflect a difference in recognizing the temperature and the temperature range as the normal temperature. The difference tends to result from, for example, the birthplace or the dwelling place of the user 5. In this case, the user 5 may set the normal temperature to any temperature or any temperature range within, but is not limited to, a range of, for example, about 0 to 35 °C.

In the aerial image display device 1, the light emission controller 6 may include a storage 50 that stores image data SD (illustrated in FIG. 1B). The light emission controller 6 may store the image data SD in a manner to distinguish the high-temperature image data SDH (illustrated in FIG. 1B) of the high-temperature image portion 43 from the normal temperature image data SDL (illustrated in FIG. 1B). The storage 50 may include, for example, a line memory or a frame memory. The aerial image display device 1 may include no storage 50 in the light emission controller 6 and may include the storage 50 separately. The storage 50 may output the image data SD including the normal temperature image data SDL and the high-temperature image data SDH to the light emission controller 6 as the visible light image signal SV. The storage 50 may generate the infrared image signal SI based on the high-temperature image data SDH and output the infrared image signal SI to the light emission controller 6.

When the image 4 includes the high-temperature image portion 43 representing a high-temperature object having a temperature higher than the normal temperature (illustrated in FIG. 3 as an example), the aerial image display device 1 displays the high-temperature image portion 43 on the display surface 2a using light including infrared light. The light including infrared light may be visible light emitted from the visible light emitters 21a or 24a and infrared light emitted from the infrared light emitters 21b or 24b. The aerial image display device 1 displays the normal temperature image portion 44 on the display surface 2a using visible light emitted from the visible light emitters 21a or 24a. In the display device 2, the display surface 2a emits the image light L including the visible light L1 for the normal temperature image portion 44 and the visible light L1 and the infrared light L2 for the high-temperature image portion 43. The image light L is reflected from the reflective optical system 3 and forms an image as the aerial image R. The user 5 can visually perceive the visible light aerial image R1 formed with the visible light L1 and cutaneously perceive the temperature of the infrared aerial image R2 formed with the infrared light L2. The aerial image display device 1 can provide the user 5 with a new visual experience and a realistic visual experience using infrared light.

The light emission controller 6 or the storage 50 may prestore data (e.g., data corresponding to, for example, the high-temperature image data SDH in FIG. 1B) of a specific image (e.g., an image of a person or an image of a fireplace) that is possibly to be the high-temperature image portion 43 in a manner associated with a temperature. When the image data of the image 4 includes the specific image data, the display device 2 displaying the image 4 may compare the temperature detected by the temperature sensor 60 with the prestored temperature associated with the specific image data to distinguish between, for example, the normal temperature image data SDL and the high-temperature image data SDH. The temperature sensor 60 may be connected to at least one of the light emission controller 6 or the storage 50.

The aerial image display device 1 may display the high-temperature image portion 43 as a video. In this case, the user 5 can perceive the movement of the high-temperature image portion 43 (specifically, the high-temperature object) visually and cutaneously. As illustrated in FIG. 3, when the high-temperature object is a bonfire, the user 5 can perceive the movement of the flame both visually and cutaneously. The aerial image display device 1 can thus provide the user 5 with a new visual experience using infrared light. The light emission controller 6 can control the emission and non-emission of the multiple visible light emitters 21a or 24a and the multiple infrared light emitters 21b or 24b. The high-temperature image portion 43 can be displayed as a video when the light emission controller 6 controls the emission and non-emission of the multiple visible light emitters 21a or 24a and the multiple infrared light emitters 21b or 24b.

The high-temperature image portion 43 includes a visible light image 43a and an infrared image 43b. As illustrated in FIG. 3, the light emission controller 6 may cause the infrared image 43b to have a size to include the visible light image 43a on the display surface 2a of the display device 2. This allows the infrared aerial image R2 to have a size to include the visible light aerial image R1 on a virtual imaging plane 8 of the aerial image R. The user 5 can thus perceive the heat of the high-temperature object and also the radiant heat emitted (radiated) from the high-temperature object to the surroundings or the conductive heat transmitted through heat conduction. This can provide the user 5 with a more realistic visual experience.

The light emission controller 6 may cause the display surface 2a to display the high-temperature image portion 43 with the infrared image 43b including a temperature gradient portion 43ba surrounding the visible light image 43a. The temperature gradient portion 43ba is a portion in which infrared light has an intensity decreasing as the distance from the center of the visible light image 43a. Thus, the infrared aerial image R2 with a temperature gradient portion surrounding the visible light aerial image R1 can be formed on the virtual imaging plane 8. The temperature gradient portion of the infrared aerial image R2 is a portion in which the infrared light L2 has an intensity decreasing as the distance from the center (centroid) or the edge of the visible light aerial image R1 perceived by the user 5 in the same manner as or in a similar manner to the temperature gradient portion 43ba. The user 5 can thus perceive the heat of the high-temperature object and also the radiant heat emitted from the high-temperature object to the surroundings or the conductive heat transmitted through heat conduction. This can provide the user 5 with a more realistic visual experience.

The temperature gradient portion 43ba may have a temperature gradient in, but is not limited to, a range of about 0.1 to 10 °C/mm or in a range of about 0.1 to 3 °C/mm.

The aerial image display device 1 may include a time lag controller 7. To display the high-temperature image portion 43 as a video, the time lag controller 7 is configured to delay the movement of the infrared image 43b relative to the movement of the visible light image 43a. Thus, the user 5 visually perceives the movement of the high-temperature object before cutaneously perceiving the movement of the high-temperature object. Heat transfer, which includes components of convection and heat conduction, may occur with a delay relative to the movement of an object. This embodiment can produce the delay in heat transfer relative to the movement of an object. A time lag $\Delta t$ of the movement of the infrared image 43b relative to the movement of the visible light image 43a may be in, but not limited to, a range of, for example, about 0.1 to 1.0 seconds. The time lag $\Delta t$ may be determined based on, for example, the size (the number of pixels) of the visible light image 43a, the distance between the user 5 and the virtual imaging plane 8, the heat conductivity of the air, or the estimated temperature of the high-temperature object. The delay in the movement of the infrared image 43b relative to the movement of the visible light image 43a can provide the user 5 with a more realistic visual experience.

The time lag controller 7 may gradually increase the intensity of infrared light of the infrared image 43b in response to the user 5 touching the high-temperature image portion 43 displayed as a still image or a video with a finger or another part. More specifically, the temperature of the high-temperature object is increased gradually from the moment when the user 5 touches the high-temperature image portion 43 with a finger or another part to cause the user 5 to cutaneously feel the temperature while touching the high-temperature image portion 43. Heat transfer includes the component of heat conduction, and an object has a heat capacity. A delay may thus occur in transferring heat from an object as the high-temperature object to a finger or another part of the user 5 to increase the temperature of the finger or another part of the user 5. The temperature increase reflecting the heat conduction and the heat capacity can produce a cutaneous sensation that may arise when the user 5 actually touches the object with a finger or another part. For example, when the user 5 touches the high-temperature image portion 43 representing an animal with a finger, the finger of the user 5 may be warmed gradually. The rate of temperature increase in the infrared image 43b may be in, but not limited to, a range of 0.1 to 1 °C/second. The temperature increase may be in, but not limited to, a range of about 3 to 10 °C.

The high-temperature object may be at least one selected from the group consisting of a person, an animal, a character, and a heat generating object. The character may be a popular character in, for example, animations or movies, or may be a character created by a creator of the aerial image display device 1. The character may be a character selected from, by the user 5 of the aerial image display device 1, multiple samples displayed on a part of the display surface 2a. The heat generating object may be, for example, a flame, hot water in a bath or a hot spring, heated food or drink, or the sun. The heat generating object may be either a heat generating object, such as the sun, that generates heat or a heat generating object, such as hot water, that is heated.

When the aerial image R includes the high-temperature image portion 43 representing a high-temperature object having a temperature higher than the predetermined temperature (e.g., normal temperature), the liquid crystal display device causes the infrared light emitters 21b corresponding to the high-temperature image portion 43 in the backlight to emit light. The self-luminous display device causes the infrared light emitters 24b corresponding to the high-temperature image portion 43 to emit light. The light intensity of the infrared light emitters 21b or 24b may be controlled based on the estimated temperature of the high-temperature image portion. The light intensity of the infrared light emitters 21b or 24b may be controlled by, for example, the light emission controller 6 connected to or included in the display device 2 that controls a current input into or a voltage applied to the infrared light emitters 21b or 24b. When the high-temperature image portion 43 is, for example, a person, an animal, or a character, the light intensity of the infrared light emitters 21b or 24b may be controlled to allow the user 5 to perceive the warmth corresponding to the body temperature (about 35 to 37 °C) of the person, the animal, or the character. When the high-temperature image portion 43 is a heat generating object such as hot water (about 38 to 42 °C), the light intensity of the infrared light emitters 21b or 24b may be controlled to allow the user 5 to perceive the warmth corresponding to the hot water. When the high-temperature image portion 43 is a heat generating object such as a flame, the light intensity of the infrared light emitters 21b or 24b may be controlled to allow the user 5 to perceive the warmth (about 40 to 50 °C) to be obtained when the user 5 places a hand over the flame. When the high-temperature image portion 43 is a heat generating object such as the sun, the light intensity of the infrared light emitters 21b or 24b may be controlled to allow the user 5 to perceive the warmth (about 30 to 50 °C) corresponding to the heat from the sun.

When the multiple visible light emitters 24a alone emit light, the visible light image alone can be displayed. When the multiple infrared light emitters 24b alone emit light, the infrared image (warm portion) alone can be displayed. The warm portion may be used as a heater in a cold season such as winter. When both the multiple visible light emitters 24a and the multiple infrared light emitters 24b emit light, the image 4 may include the visible light image in one part and the warm portion in another part. In this case, the visible light image may be a bright image having high brightness, such as the sun, to provide visual warmth to the user.

The reflective optical system 3 may include a first concave mirror 31, a convex mirror 32, and a second concave mirror 33 as illustrated in FIGs. 1A and 1B.

The first concave mirror 31 is located on an optical path of the image light L emitted from the display device 2. The first concave mirror 31 is configured to reflect, in a direction different from a direction toward the display device 2, the image light L emitted from the display device 2. The convex mirror 32 is located on an optical path of the image light L reflected from the first concave mirror 31. The convex mirror 32 is configured to reflect, in a direction different from a direction toward the first concave mirror 31, the image light L reflected from the first concave mirror 31. The second concave mirror 33 is located on an optical path of the image light L reflected from the convex mirror 32. The second concave mirror 33 is configured to reflect, in a direction different from a direction toward the convex mirror 32, the image light L reflected from the convex mirror 32 and form the aerial image R as a real image. The reflective optical system 3 including multiple reflective optical elements can form the aerial image R with less distortion.

The first concave mirror 31 includes a reflective surface 31a having a curvature Sa1. The convex mirror 32 includes a reflective surface 32a having a curvature Sb. The second concave mirror 33 includes a reflective surface 33a having a curvature Sa2. The curvature Sa1 is defined by a value of $D_{MAX}/H$ (refer to FIG. 5), where $D_{MAX}$ is a maximum value of a length parallel to an optical axis OA between a point on the reflective surface 31a and a line segment LS, and the line segment LS has a length of $2 \times H$. The line segment LS connects both ends of the reflective surface 31a in a cross section taken along an optical axis of the image light L incident on the first concave mirror 31. A maximum value of $D_{MAX}/H$ among the values obtained at different cross-sectional positions may be defined as the curvature Sa1. The curvature Sb and the curvature Sa2 are also defined in the same manner as or in a similar manner to the curvature Sa1.

In the aerial image display device 1, the curvature Sa1 of the first concave mirror 31 is greater than the curvature Sa2 of the second concave mirror 33, and the curvature Sa2 of the second concave mirror 33 is greater than the curvature Sb of the convex mirror 32. This allows the first concave mirror 31 reflecting the image light L emitted from the display device 2 toward the convex mirror 32 to be located closer to the display device 2. This reduces the space occupied by the display device 2 and the reflective optical system 3, thus reducing the size of the aerial image display device 1. The size of the aerial image display device 1 is reduced to reduce an optical path length of the image light L between the display surface 2a of the display device 2 and the reflective surface 33a of the second concave mirror 33, thus reducing the loss of the image light L due to, for example, unintended scatter or interference. The aerial image display device 1 can thus have higher display quality.

The aerial image display device 1 includes the reflective optical system 3 including the first concave mirror 31, the convex mirror 32, and the second concave mirror 33 to display the aerial image R. Each of the reflective surface 31a of the first concave mirror 31, the reflective surface 32a of the convex mirror 32, and the reflective surface 33a of the second concave mirror 33 can thus have an appropriately designed shape to reduce the distortion of the aerial image R. In the aerial image display device 1, the reflective optical system 3 includes no optical element (e.g., a beam splitter or a polarizing filter) for transmitting or separating part of the incident image light L. The aerial image R is thus less likely to have lower luminance. The aerial image display device 1 can also reduce the luminance of the image 4 on the display surface 2a while sufficiently maintaining the luminance of the aerial image R. The aerial image display device 1 may thus consume less power.

With the convex mirror 32 having the curvature Sb being relatively small in the aerial image display device 1, the image light L reflected from the convex mirror 32 is less likely to spread out. This can reduce an increase in the size of the second concave mirror 33 for reflecting the image light L reflected from the convex mirror 32. The convex mirror 32 is an optical member most contributing to enlargement of the aerial image R and thus has the greatest effect on the distortion of the aerial image R. With the convex mirror 32 having the curvature Sb being relatively small, the aerial image R has less distortion.

The first concave mirror 31 may include an adjuster for adjusting its spatial position relative to the display device 2, such as the distance from the display device 2 or the tilt angle. The adjuster may include, for example, a support such as a rod located on a rear surface of the first concave mirror 31, a shaft located on the support to rotate the support and the first concave mirror 31, and a slider to translate the support and the first concave mirror 31. The adjuster may be manually adjustable or electrically adjustable with, for example, a stepping motor. The convex mirror 32 and the second concave mirror 33 may also include such adjusters.

The aerial image display device 1 may include the second concave mirror 33 larger (e.g., larger in diameter) than the first concave mirror 31. This structure facilitates display of the aerial image R that is enlarged. More specifically, the image light L propagates, through a space, an image that is enlarged sequentially by the first concave mirror 31 and by the convex mirror 32. The image is then enlarged finally by the second concave mirror 33 to the maximum, and is easily reflected to the virtual imaging plane 8 of the aerial image R. For the second concave mirror 33 with a relatively greater size, its reflective surface 33a can easily be shaped to correspond to each of multiple partial light beams included in the image light L. This effectively reduces the distortion of the aerial image R.

The size of the first concave mirror 31 may be defined by the length of a maximum diameter (also referred to as the length of a maximum diameter in a front view) of the reflective surface 31a of the first concave mirror 31. The size of the second concave mirror 33 may be defined by the length of a maximum diameter (also referred to as the length of a maximum diameter in a front view) of the reflective surface 33a of the second concave mirror 33. For the first concave mirror 31 having a partially spherical surface, for example, the reflective surface 31a of the first concave mirror 31 is circular in a front view. In this case, the size, or in other words, the dimension of the first concave mirror 31 may correspond to 2H (illustrated in FIG. 5) that is the length of the line segment LS including the center of the reflective surface 31a and connecting both the ends of the reflective surface 31a. Note that the center of the reflective surface 31a is defined by a lowest point (maximum protruding point) of the curved reflective surface 31a. For the first concave mirror 31 having a partially elliptic surface, the reflective surface 31a of the first concave mirror 31 is elliptic in a front view. In this case, the size of the first concave mirror 31 may correspond to the length of a major diameter selected from line segments including the center of the reflective surface 31a and connecting both the ends of the reflective surface 31a. For the reflective surface 31a of the first concave mirror 31 that is, for example, rectangular in a front view, the size of the first concave mirror 31 may correspond to the length of a maximum diameter (e.g., a diagonal diameter) selected from the line segments including the center of the reflective surface 31a and connecting both the ends of the reflective surface 31a. The size of the second concave mirror 33 and the size of the convex mirror 32 may be defined in the same or a similar manner.

The first concave mirror 31 may have a maximum diameter of, for example, about 150 to 200 mm. The second concave mirror 33 may have a maximum diameter of, for example, about 200 to 350 mm. The convex mirror 32 may have a maximum diameter of, for example, about 100 to 150 mm.

The size of the first concave mirror 31 may be defined by the area of the reflective surface 31a of the first concave mirror 31 or by the area of the reflective surface 31a of the first concave mirror 31 in a front view. The size of the second concave mirror 33 may be defined by the area of the reflective surface 33a of the second concave mirror 33 or by the area of the reflective surface 33a of the second concave mirror 33 in a front view.

The first concave mirror 31 may be a freeform concave mirror including the reflective surface 31a as a freeform surface, and the second concave mirror 33 may be a freeform concave mirror including the reflective surface 33a as a freeform surface. The convex mirror 32 may be a freeform convex mirror including the reflective surface 32a as a freeform surface. For the first concave mirror 31, the convex mirror 32, and the second concave mirror 33 respectively including the reflective surfaces 31a, 32a, and 33a as freeform surfaces, the reflective surfaces 31a, 32a, and 33a can be shaped easily to effectively reduce the distortion of the aerial image R. This effectively reduces the distortion of the aerial image R.

Each of the reflective surfaces 31a, 32a, and 33a as a freeform surface may be an XY polynomial surface (also referred to as an SPS XYP surface) defined by Formulas 1 and 2 below. The XY polynomial surface is expressed by polynomials until the tenth degree to be added to a conic reference surface. In Formulas 1 and 2, the sum of m and n is thus less than or equal to 10. In Formula 1, z is an amount of sag of a surface parallel to a Z-axis (optical axis), c is a vertex curvature, r is a distance in a radial direction (more specifically, $r^2 = x^2 + y^2$), k is a conic constant, and $C_j$ is a coefficient of a monomial $x^m y^n$.

$$z = \frac{cr^2}{1 + \sqrt{1 - (1+k)c^2 r^2}} + \sum_{j=2}^{66} C_j x^m y^n \qquad (1)$$

$$j = \frac{(m+n)^2 + m + 3n}{2} + 1 \qquad (2)$$

The reflective surface 33a of the second concave mirror 33 may overlap the display surface 2a of the display device 2, the reflective surface 31a of the first concave mirror 31, and the reflective surface 32a of the convex mirror 32 as viewed from a rear surface of the second concave mirror 33 in a direction parallel to the virtual imaging plane 8 of the aerial image R (a Y-direction in FIGs. 1A and 1B). This structure reduces the space occupied by the display device 2 and the reflective optical system 3, thus reducing the size of the aerial image display device 1. This reduces the optical path length of the image light L inside the aerial image display device 1, and thus reduces the loss of the image light L due to, for example, unintended scatter or interference. The aerial image display device 1 can thus have higher display quality.

The reflective surface 33a of the second concave mirror 33 may include the display surface 2a of the display device 2, the reflective surface 31a of the first concave mirror 31, and the reflective surface 32a of the convex mirror 32 as viewed from the rear surface of the second concave mirror 33 in the direction parallel to the virtual imaging plane 8 of the aerial image R (the Y-direction). This structure further reduces the space occupied by the display device 2 and the reflective optical system 3, thus further reducing the size of the aerial image display device 1.

The user 5 views the aerial image R in a direction substantially orthogonal to the virtual imaging plane 8. The direction parallel to the virtual imaging plane 8 of the aerial image R (the Y-direction in FIGs. 1A and 1B) thus corresponds to a height direction of the aerial image display device 1. The direction orthogonal to the virtual imaging plane 8 of the aerial image R corresponds to a thickness direction (depth direction) of the aerial image display device 1. With the reflective surface 33a overlapping or including the display surface 2a, the reflective surface 31a, and the reflective surface 32a as viewed from the rear surface of the second concave mirror 33 in the direction parallel to the virtual imaging plane 8 (the Y-direction), the aerial image display device 1 may have at least a smaller thickness (depth).

Another example aerial image display device 1 will now be described. As illustrated in FIG. 6, the backlight 21 in the transmissive display device 2 may include the multiple visible light emitters 21a arranged in a first area 23a1 on the first surface 23a and the multiple infrared light emitters 21b arranged in a second area 23a2 on the first surface 23a. The second area 23a2 does not overlap the first area 23a1 in a plan view. With the multiple visible light emitters 21a and the multiple infrared light emitters 21b arranged in different areas, white light emitted from the visible light emitters 21a is less likely to transmit through the subpixels for emitting infrared light. Infrared light emitted from the infrared light emitters 21b is less likely to transmit through the subpixels for emitting red light, the subpixels for emitting green light, and the subpixels for emitting blue light. This can improve the image quality of the visible light image and the infrared image displayed on the display surface 2a. Although the multiple visible light emitters 21a and the multiple infrared light emitters 21b are arranged in different areas, the reflective optical system 3 can be designed appropriately to form the visible light aerial image R1 and the infrared aerial image R2 at any position on the virtual imaging plane 8.

With the multiple visible light emitters 21a and the multiple infrared light emitters 21b arranged in different areas, the visible light image alone can be displayed when the multiple visible light emitters 21a alone emit light. When the multiple infrared light emitters 21b alone emit light, the infrared image (warm portion) alone can be displayed. The aerial image display device 1 may be used as a heater in a cold season such as winter. When both the multiple visible light emitters 21a and the multiple infrared light emitters 21b emit light, the image 4 may include the visible light image in one part and the warm portion in another part. In this case, the visible light image may be a bright image having high brightness, such as the sun, to provide visual warmth to the user.

As illustrated in FIG. 7, the self-luminous display device 2 may include the multiple visible light emitters 24a in the first area 23a1 on the first surface 23a and the multiple infrared light emitters 24b in the second area 23a2 on the first surface 23a. The second area 23a2 does not overlap the first area 23a1 in a plan view. With the multiple visible light emitters 24a and the multiple infrared light emitters 24b arranged in different areas, the multiple visible light emitters 24a can be arranged in an optimal manner, and the multiple infrared light emitters 24b can be arranged in an optimal manner. This can improve the image quality of the visible light image and the infrared image displayed on the display surface 2a. Although the multiple visible light emitters 24a and the multiple infrared light emitters 24b are arranged in different areas, the reflective optical system 3 can be designed appropriately to form the visible light aerial image R1 and the infrared aerial image R2 at any position on the virtual imaging plane 8.

With the multiple visible light emitters 24a and the multiple infrared light emitters 24b arranged in different areas, the visible light image alone can be displayed when the multiple visible light emitters 24a alone emit light. When the multiple infrared light emitters 24b alone emit light, the infrared image (warm portion) alone can be displayed. The aerial image display device 1 may be used as a heater in a cold season such as winter. When both the multiple visible light emitters 24a and the multiple infrared light emitter 24b emit light, the image 4 may include the visible light image in one part and the warm portion in another part. In this case, the visible light image may be a bright image having high brightness, such as the sun, to provide visual warmth to the user.

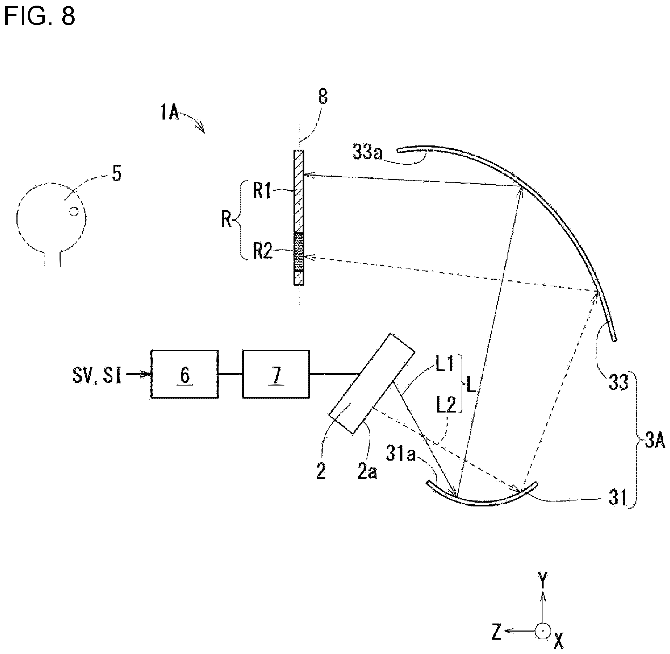

An aerial image display device according to another embodiment of the present disclosure will now be described. FIG. 8 is a diagram of the aerial image display device according to the other embodiment of the present disclosure. In the present embodiment, an aerial image display device 1Aincludes the same components as or similar components to those of the aerial image display device 1 except for the structures of the reflective optical system. Like reference numerals denote the same components as or similar components to those of the aerial image display device 1. Such components will not be described.

In the present embodiment, the aerial image display device 1A includes the display device 2 and a reflective optical system 3A. The reflective optical system 3A may include the first concave mirror 31 and the second concave mirror 33 as illustrated in FIG. 8. The first concave mirror 31 is located on the optical path of the image light L emitted from the display device 2. The first concave mirror 31 reflects, in the direction different from the direction toward the display device 2, the image light L emitted from the display device 2. The second concave mirror 33 is located on the optical path of the image light L reflected from the first concave mirror 31. The second concave mirror 33 reflects, in the direction different from the direction toward the first concave mirror 31, the image light L reflected from the first concave mirror 31.

The first concave mirror 31 includes the reflective surface 31a having the curvature Sa1. The second concave mirror 33 includes the reflective surface 33a having the curvature Sa2. The curvature Sa1 of the first concave mirror 31 may be greater than the curvature Sa2 of the second concave mirror 33. This allows the first concave mirror 31 reflecting the image light L emitted from the display device 2 toward the second concave mirror 33 to be located closer to the display device 2. This reduces the space occupied by the display device 2 and the reflective optical system 3, thus reducing the size of the aerial image display device 1A. The size of the aerial image display device 1A is reduced to reduce the optical path length of the image light L between the display surface 2a of the display device 2 and the reflective surface 33a of the second concave mirror 33, thus reducing the loss of the image light L due to, for example, unintended scatter or interference. The aerial image display device 1A can thus have higher display quality.

The first concave mirror 31 may be a freeform concave mirror including the reflective surface 31a as a freeform surface, and the second concave mirror 33 may be a freeform concave mirror including the reflective surface 33a as a freeform surface. For the first concave mirror 31 and the second concave mirror 33 respectively including the reflective surfaces 31a and 33a as freeform surfaces, the reflective surfaces 31a and 33a can be shaped easily to effectively reduce the distortion of the aerial image R. This effectively reduces the distortion of the aerial image R.

The aerial image display device 1A can provide the user 5 with a new visual experience using infrared light in the same manner as or in a similar manner to the aerial image display device 1.

The aerial image display device 1A may display the infrared image alone without displaying the visible light image on the display surface 2a in the same manner as or in a similar manner to the aerial image display device 1. In other words, the aerial image display device 1A may be used as a heater in the same manner as or in a similar manner to the aerial image display device 1.

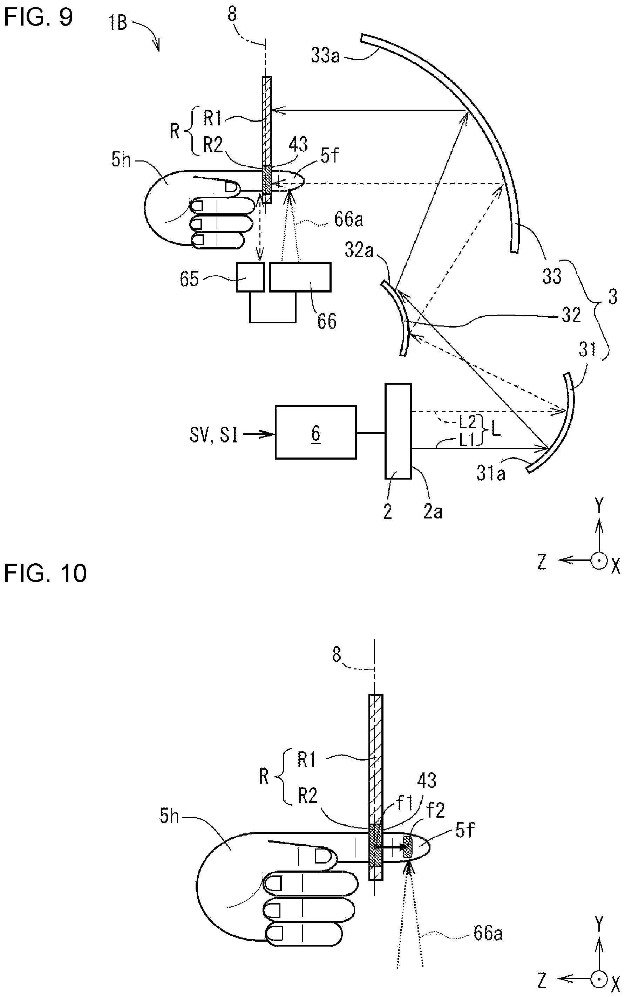

An aerial image display device according to another embodiment of the present disclosure will now be described. FIG. 9 is a diagram of an aerial image display device 1B according to the other embodiment of the present disclosure. In the present embodiment, the aerial image display device 1B differs from the aerial image display device 1 in that the aerial image display device 1B includes a stimulation signal irradiator 66 that applies a stimulation signal 66a to the body of the user. The aerial image display device 1B includes no time lag controller 7. Other components of the aerial image display device 1B are the same as or similar to those of the aerial image display device 1. Like reference numerals denote the same components as or similar components to those of the aerial image display device 1. Such components will not be described.

The aerial image display device 1B includes the stimulation signal irradiator 66 that applies, in response to one part of the body (e.g., one part of a finger 5f of a hand 5h) of the user 5 coming in contact with the high-temperature image portion 43 in the aerial image R, the stimulation signal 66a to another part of the finger 5f of the user 5 spaced from the part of the finger 5f of the user 5. This structure produces the effects described below. For example, as illustrated in FIG. 10, the finger 5f receiving thermal stimulation from the infrared light L2 at a part f1 and tactile stimulation from the stimulation signal 66a at another part f2 at the same time causes an illusion (also referred to as a mutual thermal referral effect) that the thermal stimulation in the part f1 shifts to the part f2 receiving the tactile stimulation. This allows the thermal stimulation to be conveyed in a depth direction to provide depth to the warmth felt by the user 5. Combined with an image with depth, the illusion provides the user 5 with a more realistic, new visual experience.

The part of the body of the user 5 receiving the stimulation signal 66a may be, for example, a part of the finger 5f of the hand 5h of the user, a part of the palm of the hand 5h of the user, a part of the back of the hand 5h of the user 5, or a part of an arm of the user 5.

The stimulation signal 66a may be a tactile induction signal inducing a tactile sensation in the user 5. The tactile induction signal may be a sonic signal or an ultrasonic signal being air vibration or, for example, a wind (airflow) being air pressure. The ultrasonic signal among the signals above is not audible to the user 5. The ultrasonic signal is thus advantageously less likely to interfere with the aerial image R. The ultrasonic signal may have a frequency greater than or equal to about 20 kHz, or may be about 20 kHz to 20 MHz. In this case, the stimulation signal irradiator 66 may be an ultrasonic signal generator. The ultrasonic signal generator may be a mid-air tactile generator (mid-air haptics device) including, for example, an electric-ultrasonic converter array (also referred to as an ultrasonic transducer array) to generate haptic sensations in the mid-air by converging multiple ultrasonic signals emitted from the ultrasonic transducer array through phase control.

The stimulation signal 66a may be a warmth induction signal inducing warmth. The warmth induction signal may be, for example, a near-infrared light signal or an infrared light signal that is a heat ray or, for example, hot wind (hot air flow). The warmth induction signal that is a near-infrared light signal or an infrared light signal is advantageously applicable to a part of the body of the user 5 with positional precision in a focused manner. The warmth induction signal may provide warmth (temperature) higher than the warmth (temperature) of the high-temperature image portion 43 to the part of the body of the user 5. In this case, the part of the body of the user 5 can perceive the mutual thermal referral more clearly. The warmth induction signal may provide a part of the body of the user 5 with warmth (temperature) that is, but not limited to, more than one times and about two times or less the warmth (temperature) of the high-temperature image portion 43.

The stimulation signal irradiator 66 applies the stimulation signal 66a to the part f2 of the finger 5f of the user 5 spaced from the part f1 of the finger 5f of the user 5. The space (distance) between the part f1 and the part f2 may be about

**EP 4 535 065 A1**

10 to 80 mm. In other words, the mutual thermal referral effect may occur in the distance of about 10 to 80 mm. With the distance less than 10 mm, the warmth is less likely to have depth. With the distance more than 80 mm, the mutual thermal referral is less likely to occur.

The aerial image display device 1B may include a detector 65 that detects a part (e.g., the finger 5f or another part) of the body of the user 5 coming in contact with the high-temperature image portion 43 in the aerial image R. The detector 65 may be, for example, an imaging device such as a camera. The detector 65 may be a light (electromagnetic wave) detection device that detects reflection, transmission, or non-transmission of, for example, visible light, laser light, infrared light, or electromagnetic waves. The light (electromagnetic wave) detection device may include a light emitter for emitting, for example, visible light and a light receiver for receiving, for example, visible light, and may be configured to detect the finger 5f or another coming in contact with the high-temperature image portion 43 in the aerial image R in response to the light receiver receiving reflection light reflected from the finger 5f or another part (or in response to an output from the light receiver). The optical detection device may include the light emitter for emitting, for example, visible light and the light receiver for receiving, for example, visible light, and may be configured to detect the finger 5f or another part coming in contact with the high-temperature image portion 43 in the aerial image R in response to the finger 5f or another part blocking light being received by the light receiver (in response to the loss of the output from the light receiver). The detector 65 may be a sonic wave detection device that detects reflection, transmission, or non-transmission of sonic waves or ultrasonic waves. The sound wave detection device may operate on the same principle as or a similar principle to the optical detection device.

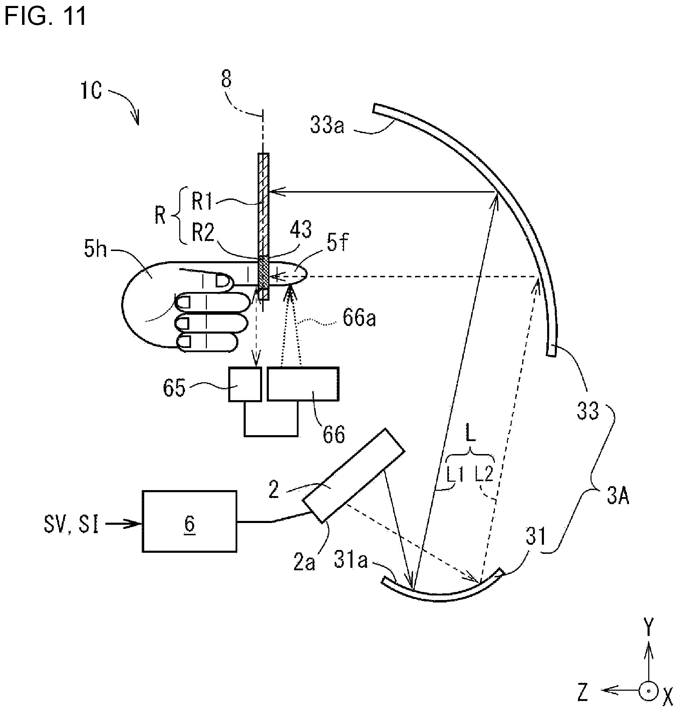

FIG. 11 is a diagram of an aerial image display device 1C according to another embodiment of the present disclosure. In the present embodiment, the aerial image display device 1C differs from the aerial image display device 1A in that the aerial image display device 1C includes the stimulation signal irradiator 66 that applies the stimulation signal 66a to the body of the user. The aerial image display device 1C includes no time lag controller 7. Other components of the aerial image display device 1C are the same as or similar to those of the aerial image display device 1A. Like reference numerals denote the same components as or similar components to those of the aerial image display device 1A. Such components will not be described.

The aerial image display device 1C includes a reflective optical system 3A. The reflective optical system 3A includes the first concave mirror 31 and the second concave mirror 33 and includes no convex mirror 32. This structure reduces the size of the aerial image display device 1C and allows the thermal stimulation to be conveyed in the depth direction to provide depth to the warmth felt by the user 5. Combined with an image with depth, the illusion provides the user 5 with a more realistic, new visual experience.

The aerial image display device 1, 1A, 1B, or 1C may be a head-up display to be installed in a vehicle. In this case, for example, a part of a front windshield in the vehicle may be a reflector. The reflector may be used as the second concave mirror 33. The reflector may allow the user to view the aerial image R. The reflector may be a semi-transmissive reflector (a reflector for transmitting about half of light and reflecting about another half of the light).

In the longitudinal sectional views illustrated in FIGs. 1A, 1B, 9, and 11, each of the aerial image display devices 1, 1A, 1B, and 1C may include the display device 2 (and the convex mirror 32) between the first concave mirror 31 and the second concave mirror 33 as viewed laterally. In other words, the first concave mirror 31 may be at the lowest position, and the second concave mirror 33 may be at the highest position. In this case, the aerial image display device 1, 1A, 1B, or 1C can be less tall and be smaller easily.

Although the embodiments of the present disclosure have been described in detail, the present disclosure is not limited to the embodiments described above, and may be changed or varied in various manners without departing from the spirit and scope of the present disclosure. For example, the infrared light emitters 21b may have a smaller size (dimension) than the visible light emitters 21a. This is because infrared light has a higher transmittance through the liquid crystal panel 22 than visible light. Smaller infrared light emitters 21b with lower light intensity can consume less power.

As described above, the display device and the aerial image display device according to one or more embodiments of the present disclosure can provide the user with a new visual experience using infrared light.

The structure according to one or more embodiments of the present disclosure may have aspects (1) to (19) described below.

(1) A display device, comprising:

a display,
wherein the display device is configured to display, using light including infrared light, a high-temperature image portion representing a high-temperature object having a temperature higher than a predetermined temperature in response to an image displayed by the display including the high-temperature image portion.

(2) An aerial image display device, comprising:

a display including a display surface; and

a reflective optical system configured to reflect image light of an image displayed on the display surface and form an aerial image as a real image,

wherein the aerial image display device is configured to display, using light including infrared light, a high-temperature image portion representing a high-temperature object having a temperature higher than a predetermined temperature on the display surface in response to the image including the high-temperature image portion.

(3) The aerial image display device according to (2), wherein

the aerial image display device is configured to display the high-temperature image portion as a video.

(4) The aerial image display device according to (2) or (3), further comprising:

a temperature detector configured to detect an ambient temperature,

wherein the predetermined temperature is a temperature detected by the temperature detector.

(5) The aerial image display device according to any one of (2) to (4), further comprising:

a light emission controller,

wherein the display includes a plurality of visible light emitters and a plurality of infrared light emitters, and

the light emission controller is configured to control emission and non-emission of the plurality of visible light emitters and the plurality of infrared light emitters to allow displaying of the high-temperature image portion as a video.

(6) The aerial image display device according to (5), wherein

the plurality of visible light emitters and the plurality of infrared light emitters are arranged alternately in a matrix.

(7) The aerial image display device according to any one of (2) to (6), wherein

the high-temperature image portion includes a visible light image displayed with visible light and an infrared image displayed with infrared light, and

the infrared image has a size to include the visible light image on the display surface.

(8) The aerial image display device according to (7), wherein

the infrared image includes a temperature gradient portion surrounding the visible light image on the display surface, and the temperature gradient portion is a portion in which infrared light has an intensity decreasing as the distance from a center of the visible light image.

(9) The aerial image display device according to (7) or (8), further comprising:

a time lag controller configured to delay a movement of the infrared image relative to a movement of the visible light image in the high-temperature image portion displayed as a video.

(10) The aerial image display device according to any one of (2) to (9), further comprising:

a stimulation signal irradiator configured to apply, in response to one part of a body of a user coming in contact with the high-temperature image portion in the aerial image, a stimulation signal to another part of the body of the user spaced from the one part.

(11) The aerial image display device according to (10), wherein

the stimulation signal is a tactile induction signal inducing a tactile sensation.

(12) The aerial image display device according to (10), wherein

the stimulation signal is a warmth induction signal inducing warmth.

(13) The aerial image display device according to any one of (2) to (12), wherein

the high-temperature object includes at least one selected from the group consisting of a person, an animal, a character, and a heat generating object.

(14) The aerial image display device according to any one of (2) to (13), wherein the reflective optical system includes

a first concave mirror configured to reflect the image light in a direction different from a direction toward the display,

a convex mirror configured to reflect the image light reflected from the first concave mirror in a direction different from a direction toward the first concave mirror, and

a second concave mirror configured to reflect the image light reflected from the convex mirror in a direction different from a direction toward the convex mirror and form an aerial image as a real image.

(15) The aerial image display device according to (14), wherein

Sa1 > Sa2 > Sb, where Sa1 is a curvature of the first concave mirror, Sb is a curvature of the convex mirror, and Sa2 is a curvature of the second concave mirror.

(16) The aerial image display device according to (14) or (15), wherein

each of the first concave mirror and the second concave mirror is a freeform concave mirror, and
the convex mirror is a freeform convex mirror.

(17) The aerial image display device according to any one of (2) to (13), wherein the reflective optical system includes

a first concave mirror configured to reflect the image light in a direction different from a direction toward the display, and
a second concave mirror configured to reflect the image light reflected from the first concave mirror in a direction different from a direction toward the first concave mirror and form an aerial image as a real image.

(18) The aerial image display device according to (17), wherein
the first concave mirror has a greater curvature than the second concave mirror.
(19) The aerial image display device according to (17) or (18), wherein
each of the first concave mirror and the second concave mirror is a freeform concave mirror.

INDUSTRIAL APPLICABILITY

In the embodiments of the present disclosure, the aerial image display device allows an operation of aerial images without touching, and may be used in, but not limited to, products in various fields described below. Examples of such products include a communication device for communication or conversations using aerial images, a medical interview device that allows doctors to interview patients using aerial images, a navigation device and a driving control device for vehicles such as automobiles, an order reception and registration device used in, for example, shops, an operational panel used in, for example, buildings or elevators, a learning device for teaching or learning classes using aerial images, an office device for business communication or instructions using aerial images, a gaming device used for playing games using aerial images, a projector for projecting images on the ground or walls of buildings, for example, amusement parks or game arcades, a simulation device for simulation using aerial images in, for example, universities or medical organizations, a large display for displaying prices and other information in, for example, markets or stock exchanges, and an imaging viewing device used for viewing aerial images.

REFERENCE SIGNS

1, 1A, 1B, 1C aerial image display device
2 display (display device)
2a display surface
21 backlight
21a visible light emitter
21b infrared light emitter
22 liquid crystal panel
23 substrate
23a first surface
23a1 first area
23a2 second area
24 pixel
24a visible light emitter
24aR red-light emitting element
24aG green-light emitting element
24aB blue-light emitting element
24b infrared light emitter
24bI infrared light emitting element
3, 3A reflective optical system
31 first concave mirror
31a reflective surface

32 convex mirror
32a reflective surface
33 second concave mirror
33a reflective surface
4 image
43 high-temperature image portion
43a visible light image
43b infrared image
43ba temperature gradient portion
44 normal temperature image portion
5 user
6 light emission controller
7 time lag controller
8 virtual imaging plane
50 storage
60 temperature sensor
65 detector
66 stimulation signal irradiator
66a stimulation signal

## Claims

1. A display device, comprising:

   a display,
   wherein the display device is configured to display, using light including infrared light, a high-temperature image portion representing a high-temperature object having a temperature higher than a predetermined temperature in response to an image displayed by the display including the high-temperature image portion.

2. An aerial image display device, comprising:

   a display including a display surface; and
   a reflective optical system configured to reflect image light of an image displayed on the display surface and form an aerial image as a real image,
   wherein the aerial image display device is configured to display, using light including infrared light, a high-temperature image portion representing a high-temperature object having a temperature higher than a predetermined temperature on the display surface in response to the image including the high-temperature image portion.

3. The aerial image display device according to claim 2, wherein
   the aerial image display device is configured to display the high-temperature image portion as a video.

4. The aerial image display device according to claim 2 or claim 3, further comprising:

   a temperature detector configured to detect an ambient temperature,
   wherein the predetermined temperature is a temperature detected by the temperature detector.

5. The aerial image display device according to any one of claims 2 to 4, further comprising:

   a light emission controller,
   wherein the display includes a plurality of visible light emitters and a plurality of infrared light emitters, and
   the light emission controller is configured to control emission and non-emission of the plurality of visible light emitters and the plurality of infrared light emitters to allow displaying of the high-temperature image portion as a video.

6. The aerial image display device according to claim 5, wherein
   the plurality of visible light emitters and the plurality of infrared light emitters are arranged alternately in a matrix.

7. The aerial image display device according to any one of claims 2 to 6, wherein

the high-temperature image portion includes a visible light image displayed with visible light and an infrared image displayed with infrared light, and
the infrared image has a size to include the visible light image on the display surface.

8. The aerial image display device according to claim 7, wherein
the infrared image includes a temperature gradient portion surrounding the visible light image on the display surface, and the temperature gradient portion is a portion in which infrared light has an intensity decreasing as the distance from a center of the visible light image.

9. The aerial image display device according to claim 7 or claim 8, further comprising:
a time lag controller configured to delay a movement of the infrared image relative to a movement of the visible light image in the high-temperature image portion displayed as a video.

10. The aerial image display device according to any one of claims 2 to 9, further comprising:
a stimulation signal irradiator configured to apply, in response to one part of a body of a user coming in contact with the high-temperature image portion in the aerial image, a stimulation signal to another part of the body of the user spaced from the one part.

11. The aerial image display device according to claim 10, wherein
the stimulation signal is a tactile induction signal inducing a tactile sensation.

12. The aerial image display device according to claim 10, wherein
the stimulation signal is a warmth induction signal inducing warmth.

13. The aerial image display device according to any one of claims 2 to 12, wherein
the high-temperature object includes at least one selected from the group consisting of a person, an animal, a character, and a heat generating object.

14. The aerial image display device according to any one of claims 2 to 13, wherein
the reflective optical system includes

a first concave mirror configured to reflect the image light in a direction different from a direction toward the display,
a convex mirror configured to reflect the image light reflected from the first concave mirror in a direction different from a direction toward the first concave mirror, and
a second concave mirror configured to reflect the image light reflected from the convex mirror in a direction different from a direction toward the convex mirror and form an aerial image as a real image.

15. The aerial image display device according to claim 14, wherein
Sa1 > Sa2 > Sb, where Sa1 is a curvature of the first concave mirror, Sb is a curvature of the convex mirror, and Sa2 is a curvature of the second concave mirror.

16. The aerial image display device according to claim 14 or claim 15, wherein

each of the first concave mirror and the second concave mirror is a freeform concave mirror, and
the convex mirror is a freeform convex mirror.

17. The aerial image display device according to any one of claims 2 to 13, wherein
the reflective optical system includes

a first concave mirror configured to reflect the image light in a direction different from a direction toward the display, and
a second concave mirror configured to reflect the image light reflected from the first concave mirror in a direction different from a direction toward the first concave mirror and form an aerial image as a real image.

18. The aerial image display device according to claim 17, wherein
the first concave mirror has a greater curvature than the second concave mirror.

**19.** The aerial image display device according to claim 17 or claim 18, wherein
each of the first concave mirror and the second concave mirror is a freeform concave mirror.

FIG. 1A

FIG. 1B

FIG. 2A

FIG. 2B

## FIG. 3

## FIG. 4A

FIG. 4B

FIG. 4C

FIG. 5

FIG. 6

FIG. 7

# FIG. 8

FIG. 9

FIG. 10

# FIG. 11

## INTERNATIONAL SEARCH REPORT

| International application No. |
| --- |
| **PCT/JP2023/019033** |

### A. CLASSIFICATION OF SUBJECT MATTER

*G02B 30/56*(2020.01)i; *G02B 17/06*(2006.01)i; *G02F 1/13357*(2006.01)i; *G06F 3/01*(2006.01)i; *G09F 9/00*(2006.01)i; *G09F 19/18*(2006.01)i
FI: G02B30/56; G02F1/13357; G02B17/06; G09F9/00 358; G09F19/18 Z; G06F3/01 560

According to International Patent Classification (IPC) or to both national classification and IPC

### B. FIELDS SEARCHED

Minimum documentation searched (classification system followed by classification symbols)

G02B30/56; G02F1/13357; G06F3/01; G09F9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-530292 A (LIGHT FIELD LAB, INC.) 11 November 2021 (2021-11-11) paragraphs [0096]-[0097], fig. 1-5 | 1 |
| A | paragraphs [0096]-[0097], fig. 1-5 | 2-19 |
| Y | WO 2018/084082 A1 (PANASONIC INTELLECTUAL PROPERTY MANAGEMENT CO., LTD.) 11 May 2018 (2018-05-11) paragraphs [0020], [0028], [0061], [0110], fig. 1, 3, 16 | 1 |
| A | paragraphs [0020], [0028], [0061], [0110], fig. 1, 3, 16 | 2-19 |
| Y | JP 2020-140821 A (ISHIZUKA GLASS) 03 September 2020 (2020-09-03) paragraphs [0005]-[0010], [0026], fig. 1, 2 | 1 |
| A | paragraphs [0005]-[0010], [0026], fig. 1, 2 | 2-19 |
| A | CN 205716472 U (HARVATEK OPTOELECTRONICS (SHENZHEN) CO., LTD.) 23 November 2016 (2016-11-23) paragraph [0022] | 1-19 |

☑ Further documents are listed in the continuation of Box C. ☑ See patent family annex.

| * | Special categories of cited documents: |
| --- | --- |

"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| **11 July 2023** | **01 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2023/019033**

### C. DOCUMENTS CONSIDERED TO BE RELEVANT

| Category* | Citation of document, with indication, where appropriate, of the relevant passages | Relevant to claim No. |
|---|---|---|
| A | WO 2018/116544 A1 (SONY CORPORATION) 28 June 2018 (2018-06-28) paragraphs [0016], [0062]-[0070], fig. 5-9 | 10-19 |
| A | WO 2019/049767 A1 (FUJIFILM CORPORATION) 14 March 2019 (2019-03-14) paragraphs [0063]-[0065], fig. 1 | 14-16 |
| A | JP 2021-160498 A (PANASONIC INTELLECTUAL PROPERTY MANAGEMENT CO., LTD.) 11 October 2021 (2021-10-11) paragraphs [0084]-[0100], fig. 8, 10 | 17-19 |

Form PCT/ISA/210 (second sheet) (January 2015)

**INTERNATIONAL SEARCH REPORT**
Information on patent family members

International application No.

**PCT/JP2023/019033**

| Patent document cited in search report | | | Publication date (day/month/year) | Patent family member(s) | | | Publication date (day/month/year) |
|---|---|---|---|---|---|---|---|
| JP | 2021-530292 | A | 11 November 2021 | WO | 2020/023669 | A1 | |
| | | | | paragraphs [0112]-[0113], fig. 1-5 | | | |
| | | | | US | 2020/0384371 | A1 | |
| | | | | US | 2021/0220749 | A1 | |
| | | | | CN | 112512653 | A | |
| | | | | KR | 10-2021-0034585 | A | |
| WO | 2018/084082 | A1 | 11 May 2018 | US | 2019/0243451 | A1 | |
| | | | | paragraphs [0053], [0061], [0095], [0145], fig. 1, 3, 16 | | | |
| | | | | CN | 109906423 | A | |
| JP | 2020-140821 | A | 03 September 2020 | (Family: none) | | | |
| CN | 205716472 | U | 23 November 2016 | (Family: none) | | | |
| WO | 2018/116544 | A1 | 28 June 2018 | US | 2021/0286432 | A1 | |
| | | | | paragraphs [0032], [0078]-[0086], fig. 5-9 | | | |
| | | | | EP | 3557375 | A1 | |
| | | | | KR | 10-2019-0096988 | A | |
| WO | 2019/049767 | A1 | 14 March 2019 | (Family: none) | | | |
| JP | 2021-160498 | A | 11 October 2021 | US | 2023/0019596 | A1 | |
| | | | | paragraphs [0096]-[0112], fig. 8, 10 | | | |
| | | | | WO | 2021/199583 | A1 | |
| | | | | CN | 115335253 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020067707 A